# EUROPÄISCHE PATENTANMELDUNG

(11) **EP 0 989 701 A2**
(43) Veröffentlichungstag der Anmeldung: **29.03.2000**
(21) Anmeldenummer: 99203000.7
(22) Anmeldetag: 15.09.1999
(51) Int. Cl.: H04L 12/40

(54) **Datenbus**

(30) Priorität: 24.09.1998 DE 19843810
(71) Anmelder: Philips Corporate Intellectual Property GmbH, 52064 Aachen (DE); Koninklijke Philips Electronics N.V., 5621 BA Eindhoven (NL)
(72) Erfinder: Bühring, Peter, Philips Corp. Intellec. Prop. GmbH, 52064 Aachen (DE)
(74) Vertreter: von Laue, Hanns-Ulrich

(57) **Zusammenfassung**

Bei einem Datenbus für eine serielle Datenübertragung zwischen Geräten, welche Daten über den Datenbus senden und/oder empfangen können, wobei auf dem Datenbus rezessive und dominante Zustände vorgesehen sind, denen jeweils ein Bitwert zugeordnet ist, ist zur Unterbrechung einer Nachricht niedrigerer Priorität durch eine Nachricht höherer Priorität ohne zeitliche Verzögerung und ohne zusätzliche Datenkanäle vorgesehen, daß Nachrichten in Nachrichtenblöcken übertragen werden, wobei jeder Nachrichtenblock zu Beginn einen Starblock mit (n+k) dominanten und j nachfolgenden rezessiven Bits und nachfolgende Datenblöcke mit n Datenbits und m nachfolgenden rezessiven Bits aufweist,
daß ein laufend übertragener Nachrichtenblock niedriger Priorität durch ein anderes Gerät zur Übertragung eines Nachrichtenblockes mit hoher Priorität unterbrochen werden kann, indem dieses einen neuen Startblock auf dem Datenbus erzeugt und nachfolgend die zugehörigen Datenblöcke sendet,
und daß ein einen Nachrichtenblock auf dem Datenbus sendendes Gerät laufend überprüft, ob auf dem Datenbus ein Startblock auftaucht und gegebenenfalls die Sendung seines Nachrichtenblockes abbricht.

## Beschreibung

Die Erfindung betrifft einen Datenbus für eine serielle Datenübertragung zwischen Geräten, welche Daten über den Datenbus senden und/oder empfangen können, wobei auf dem Datenbus rezessive und dominante Zustände vorgesehen sind, denen jeweils ein Bitwert zugeordnet ist.

Bei derartigen Datenbussen besteht mitunter der Wunsch, eine laufend übertragene Nachricht zu unterbrechen, wenn eine Nachricht höherer Priorität übertragen werden soll. Dies ist in den meisten Fällen nur mit Einschränkungen möglich, da entweder ein sehr aufwendiger Mechanismus zur Bevorzugung dringender Nachrichten vorgesehen ist, eine dringende Nachricht nicht wirklich sofort gesendet werden kann oder zusätzliche Überrragungskanäle zur Signalisierung einer dringenden Nachricht vorgesehen sind.

So ist beispielsweise bei der US 5,546,392 ein zusätzlicher Übertragungskanal zur Signalisierung einer dringenden Nachricht vorgesehen.

Es ist Aufgabe der Erfindung, einen seriellen Datenbus anzugeben, bei dem in einem Kanal eine Nachricht geringerer Priorität jederzeit und sofort von einer Nachricht höherer Priorität unterbrochen werden kann, so daß bei Bedarf ohne Verzögerung die Nachricht höherer Priorität auf den Datenbus übertragen werden kann.

Diese Aufgabe ist erfindungsgemäß dadurch gelöst, daß Nachrichten in Nachrichtenblöcken übertragen werden, wobei jeder Nachrichtenblock zu Beginn einen Startblock mit (n+k) dominanten und j nachfolgenden rezessiven Bits und nachfolgende Datenblöcke mit n Datenbits und m nachfolgenden rezessiven Bits aufweist,
daß ein laufend übertragener Nachrichtenblock niedriger Priorität durch ein anderes Gerät zur Übertragung eines Nachrichtenblockes mit hoher Priorität unterbrochen werden kann, indem dieses einen neuen Startblock auf dem Datenbus erzeugt und nachfolgend die zugehörigen Datenblöcke sendet,
und daß ein einen Nachrichtenblock auf dem Datenbus sendendes Gerät laufend überprüft, ob auf dem Datenbus ein Startblock auftaucht und gegebenenfalls die Sendung seines Nachrichtenblockes abbricht.

Auf dem seriellen Datenbus existieren zwei Zustände; der rezessive und der dominante Zustand. Beiden Zuständen werden verschiedene Bitwerte zugeordnet, beispielsweise dem dominanten Zustand der Bitwert Null und dem rezessiven Zustand der Birwert Eins. Der Bus kann dabei beispielsweise so ausgelegt sein, daß eine sendende Quelle den dominaten Zustand dadurch erzielt, daß sie die Amplitude des Busses auf Null oder nahezu Null absenkt. Der rezessive Zustand kann durch hochohmiges Verhalten der Quelle erzielt werden, da der Bus dann von sich aus einen hohen Pegel einnimmt. Findet keine Nachrichtenübertragung statt, so nimmt der Bus ebenfalls den rezessiven Zustand ein.

Für den erfindungsgemäßen Datenbus ist festgelegt, in welcher Form Nachrichten übertragen werden. Dies geschieht in Form von Nachrichtenblöcken, wobei jeder Nachrichtenblock zu Beginn einen Startblock und diesem nachfolgend wenigstens einen Datenblock aufweist. Sowohl für die Startblöcke wie für die Datenblöcke sind bestimmte Formate festgelegt. So ist für jeden Startblock zu Beginn eines Nachrichtenblockes festgelegt, daß dieser n+k dominante und j nachfolgende rezessive Bits aufweisen muß. Datenblöcke weisen hingegen maximal n Datenbits auf, denen m nachfolgende rezessive Bits folgen. Aus dieser Festlegung ergibt sich bereits, daß dann, wenn mehr als n dominante Bits auf dem Bus auftauchen, es sich um einen Startblock handeln muß, da Datenblöcke maximal n Daten aufweisen und somit, selbst wenn diese n Datenbits alle dominant sind, maximal n dominante Bits hintereinander in einem Datenblock auftauchen können, da jedem Datenblock immer m nachfolgende rezessive Bits folgen. Es ergibt sich insoweit also bereits eine eindeutige Identifizierung der Startblöcke. Für den erfindungsgemäßen Datenbus sind ferner Nachrichtenblöcke verschiedener Prioritäten festgelegt. Es sind wenigstens zwei Prioritäten vorgesehen, welche so gestaltet sind, daß ein laufend übertragener Nachrichtenblock der niedrigeren Priorität durch einen Nachrichtenblock der höheren Priorität jederzeit und sofort unterbrochen werden kann. Dies geschieht dadurch, daß der Sender des Nachrichtenblockes mit der höheren Priorität auf dem Datenbus einen Startblock des Nachrichtenblockes der höheren Priorität erzeugt. Dies geschieht gegebenenfalls während der Übertragung des Nachrichtenblockes der niedrigeren Priorität. Der Sender des Nachrichtenblockes mit der höheren Priorität erreicht dies dadurch, daß er n+k dominante Bits auf dem Datenbus als Startblock erzeugt. Hierzu können gegebenenfalls auch dominante Bits des übertragenen Nachrichtenblockes der niedrigeren Priorität eingesetzt werden. Es können aber auch rezessive Bits dieses Nachrichtenblockes der niedrigeren Priorität durch dominante Bits überschrieben werden. Entscheidend ist dabei nur, daß der Sender des Nachrichtenblockes mit der höheren Priorität n+k dominante Bits mit j nachfolgenden rezessiven Bits auf dem Datenbus erzeugt.

Die Übertragung der Nachricht mit der höheren Priorität kann nur dann gelingen, wenn der Sender der Nachricht mit der niedrigeren Priorität die Sendung seines Nachrichtenblockes abbricht, wenn er einen Startblock auf dem Datenbus erkennt. Es ist also für den erfindungsgemäßen Datenbus ferner vorgesehen, daß ein Sender einer Nachricht laufend auf dem Datenbus überprüfen muß, ob ein Startblock eines anderen Senders auf dem Datenbus auftaucht. Ist dies der Fall, muß der Sender seine Nachricht unterbrechen. Entsprechend überprüft ein Empfänger ständig, ob ein neuer Startblock auftaucht. Ist dies der Fall bevor der Empfang der vorhergehenden Nachricht regulär beendet wurde, wird der Empfang abgebrochen und mit dem Empfang einer neuen Nachricht nach dem Startblock begonnen.

Damit ist erreicht, daß ein Nachrichtenblock einer höheren Priorität jederzeit die Übertragung eines Nachrichtenblockes einer niedrigeren Priorität unterbrechen kann, indem er einen Startblock der Nachricht mit der höheren Priorität auf dem Bus erzeugt.

Es sind für die Abstimmung zwischen den Nachrichtenblöcken der verschiedenen Prioritäten keine zusätzlichen Kanäle oder Signalisierungen auf dem Bus erforderlich. Vielmehr kann bei dem erfindungsgemäßen Datenbus auf äußerst einfache Weise eine laufende Nachricht niedrigerer Priorität durch eine Nachricht höherer Priorität unterbrochen werden. Ferner ist gewährleistet, daß die dringende Nachricht wirklich sofort gesendet werden kann und nicht erst eine bestimmte Zeit abwarten muß, um eine bereits auf dem Bus befindliche Nachricht zu Ende zu bringen oder um einen Entscheidungsprozeß abzuwickeln. Durch die Einfachheit der Vorgehensweise ist der erfindungsgemäße Datenbus äußerst einfach zu implementieren.

Durch die Ausgestaltung der Erfindung gemäß Anspruch 2 ist bereits im vorhinein bestimmt, daß nur das festgelegte Gerät die Übertragung anderer Nachrichtenblöcke unterbrechen darf.

Es kann darüber hinaus vorteilhaft festgelegt sein, wie gemäß einer weiteren Ausgestaltung der Erfindung vorgesehen ist, daß festgelegt ist, mit welcher Nachricht und somit also mit welchem Nachrichtenblock andere laufend übertragene Nachrichtenblöcke unterbrochen werden dürfen.

Wie nach einer weiteren Ausgestaltung der Erfindung vorgesehen ist, kann ein laufend übertragener Nachrichtenblock im einfachsten Fall bereits dann unterbrochen werden, wenn auf dem Datenbus das (n+1)te Bit eines Datenblocks dominant ist. Dann ist bereits grundsätzlich die Vermutung gegeben, daß ein anderer Sender einen Startblock auf dem Bus erzeugt, auch wenn noch nicht die n+k erforderlichen dominanten Bits auf dem Bus vorhanden sind. Es kann auf diese Weise der schnellstmögliche Abbruch der Übertragung des Datenblockes mit der niedrigeren Priorität erreicht werden.

Soll hingegen sichergestellt sein, daß es sich mit höherer Sicherheit um einen Startblock handelt, so kann vorteilhaft, wie gemäß weiterer Ausgestaltung der Erfindung vorgesehen, das sendende Gerät die Sendung seines Nachrichtenblockes erst dann abbrechen, wenn auf dem Bus eine festgelegte Anzahl von Bits zwischen dem n+1ten und (n+k)ten Bit dominant sind. Es kann damit je nach gewählter vorgegebener Anzahl eine hohe Sicherheit erzielt werden, daß es sich nicht um einen Datenfehler, sondern um einen Startblock eines anderen sendenden Gerätes handelt.

Im einfachsten Falle kann, wie gemäß weiterer Ausgestaltung der Erfindung vorgesehen ist, ein sendendes Gerät seinen Nachrichtenblock bereits dann abbrechen, wenn eine bitweise Überprüfung ergibt, daß ein als rezessiv gesendetes Bit auf dem Datenbus tatsächlich dominant ist. Es handelt sich dann entweder um den Startblock eines anderen sendenden Gerätes oder um einen Datenfehler.

Will ein Gerät auf dem Datenbus eine Nachricht höherer Priorität übertragen und einen gerade auf dem Datenbus übertragenen Nachrichtenblock niedrigerer Priorität zu diesem Zwecke unterbrechen, so muß ein Startblock mit n+k dominanten Bits erzeugt werden. Hierzu kann das sendende Gerät in einer Phase, in der in der zweiten Nachricht rezessive Bits erzeugt werden, diese durch n+k dominante Bits ersetzen. Es kann aber auch, wie gemäß weiterer Ausgestaltung der Erfindung vorgesehen ist, bei der Erzeugung der dominanten Bits seines Startblockes dominante Bits des gerade übertragenen Nachrichtenblockes niedrigerer Priorität mit einbeziehen. Es kann also dominante Bits des Nachrichtenblockes niedrigerer Priorität mit nutzen für die Erzeugung der dominanten Bits seines Startblockes. Damit wird eine noch schnellere Unterbrechung und damit auch schnellere Übertragung des Nachrichtenblockes höherer Priorität erzielt.

Um die Verlustzeiten insbesondere für den Startblock und für die Zeit, die für die rezessiven Bits am Ende der Blöcke benötigt wird, gering zu halten ist nach weiterer Ausgestaltung der Erfindung vorgesehen, daß die Anzahl der rezessiven Bits in den Startblöcken und den Datenblöcken jeweils nur eins beträgt und daß die Anzahl der dominanten Bits eines Startblockes um eins größer ist als die Anzahl der Datenbits in den Datenblöcken. Damit ist das Prozedere gemäß des erfindungsgemäßen Datenbusses bereits durchführbar und es wird minimal zusätzlicher Zeitaufwand für die Erkennung der Startblöcke benötigt.

Im einfachsten Falle können, wie gemäß weiterer Ausgestaltung der Erfindung vorgesehen ist, nur Nachrichten zweier Prioritäten existieren. Es ist damit auf einfachste Weise klar, welche Nachricht andere Nachrichten unterbrechen darf.

Zur Signalisierung der Priorität einer übertragenen Nachricht können vorteilhaft die Merkmale gemäß Anspruch 11 eingesetzt werden.

Nachfolgend wird ein Ausführungsbeispiel der Erfindung anhand der Zeichnung näher erläutert. Es zeigen:
Fig. 1 eine schematische Darstellung der Struktur eines Nachrichtenblockes auf dem erfindungsgemäßen Datenbus und
Fig. 2 eine schematische Darstellung der Unterbrechung der Übertragung eines Nachrichtenblockes niedrigerer Priorität durch einen Nachrichtenblock höherer Priorität. In Fig. 1 ist ein Nachrichtenblock NB, wie er auf dem erfindunsgemäßen Datenbus übertragen werden könnte, schematisch dargestellt.

Es ist schematisch angedeutet, daß auf dem Bus zwei Zustände existieren können. Einerseits existiert der dominante Zustand d, welcher in dem Ausführungsbeispiel einen niedrigen Pegel bedeutet. Ferner existiert ein rezessiver Zustand r, welcher in dem Ausführungsbeispiel einen hohen Pegel auf dem Bus bedeutet. Es kann beispielsweise festgelegt sein, daß dem dominanten Zustand der Bitwert 0 und dem rezessiven Zustand des Busses der Bitwert 1 zugeordnet ist.

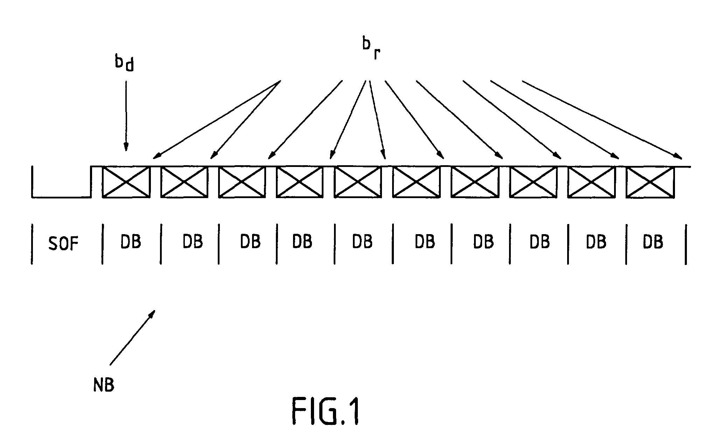

Zu Beginn jedes Nachrichtenblockes NB wird ein Startblock SOF übertragen. Es ist festgelegt, daß in jedem Startblock zu Beginn n+k dominante Bits übertragen werden. Dies ist in der Figur durch entsprechende niedrige Amplitude auf dem Niveau d der dominanten Bits angedeutet. Es ist ferner festgelegt, daß den n+k dominanten Bits in dem Startblock j rezessive Bits nachfolgen. Dies ist in der Fig. 1 dadurch erkennbar, daß am Ende des Startblockes SOF der Datenbus hohen Pegel annimmt, also wenigstens ein rezessives Bit übertragen wird.

Innerhalb des Nachrichtenblockes wird eine vorgegebene Anzahl von Datenblöcken DB übertragen; in dem Ausführungsbeispiel gemäß Fig. 1 handelt es sich um zehn Datenblöcke.

Innerhalb eines jeden Datenblockes DB werden zunächst n Datenbits übertragen. Innerhalb jeden Datenblockes folgen den n Datenbits m rezessive Bits. Diese sind in der Figur jeweils hinter den Datenbits angedeutet und mit bᵣ gekennzeichnet.

Die in der Figur angedeuteten Datenbits b_{d} jedes Datenblockes DB können, je nach Inhalt der zu übertragenen Nachricht entweder rezessiv oder dominant sein.

Im einfachsten Falle kann für die Anzahl j der rezessiven Bits in dem Startblock und der Anzahl m der rezessiven Bits in den Datenblöcken festgelegt sein, daß sie jeweils nur ein Bit betragen, daß also j=1 und m=1 gilt.
Ferner kann festgelegt sein, daß die Anzahl n+k der dominanten Bits in dem Startblock nur um ein Bit höher ist als die Anzahl n der Datenbits in den Datenblöcken, daß also k=1 ist. Es wird damit eine minimale Länge des Startblockes erzielt und somit auch eine minimale Übertragungszeit für die Startblöcke.

Es soll im folgenden für die Erläuterung des Ausführungsbeispiels angenommen werden, daß in jedem Datenblock vier Datenbits übertragen werden, daß also n=4 ist, und daß der Startblock nur um ein Bit länger ist, daß also k=1 ist. Ferner soll die Anzahl der rezessiven Bits nur 1 betragen, es gilt also j=1 und m=1.

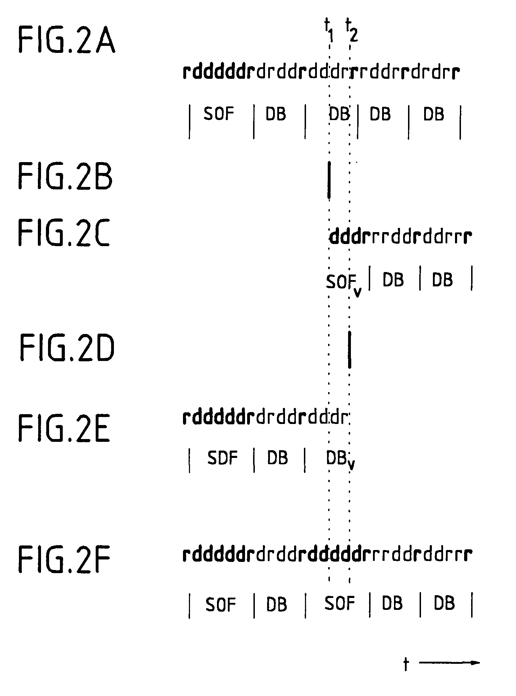

Diese Verabredung soll insbesondere für die Erläuterung des Vorgangs der Unterbrechung eines laufend übertragenen Nachrichtenblockes durch einen Nachrichtenblock höherer Priorität gemäß Fig. 2 gelten.

Für die Darstellung gemäß Fig. 2 gilt, daß d die Übertragung eines dominanten Bits und r die Übertragung eines rezessiven Bits auf dem Datenbus andeutet. Fett dargestellte Bits d oder r gehören entweder zu einem Startblock SOF oder sind ein rezessives Bit eines Datenblockes DB.

In Fig. 2A ist zunächst eine mögliche Übertragung eines Nachrichtenblockes niedrigerer Priorität auf dem Datenbus angedeutet. Der Nachrichtenblock weist zu Beginn einen Startblock SOF auf, in dem zunächst fünf dominante Bits d und ein nachfolgend übertragenes rezessives Bit r auftaucht. In der Darstellung gemäß Fig. 2A folgen diesem Startblock SOF vier Datenblöcke DB, in denen jeweils zunächst vier Datenbits d oder r und nachfolgend jeweils ein rezessives Bit r übertragen wird.

Es kann nun beispielsweise zum Zeitpunkt t₁, der in Fig. 2B durch einen Balken signalisiert ist, der Wunsch bestehen, diese übertragene Nachricht gemäß Fig. 2A zu unterbrechen. Es soll statt dessen ein Nachrichtenblock höherer Priorität übertragen werden.

Die Übertragung eines neuen Nachrichtenblockes mit der höheren Priorität erfordert zu Beginn dieser Nachricht die Übertragung eines neuen Startblockes SOF.

Dazu ist es erforderlich, daß auf dem Datenbus fünf dominante Bits d erzeugt werden. Dies kann beispielsweise in einer Übertragungslücke geschehen oder dadurch geschehen, daß fünf rezessive Bits auf dem Datenbus durch dominante Bits ersetzt werden. Diese Alternativen stehen jedoch oftmals dann nicht zur Verfügung, wenn laufend eine Nachricht auf dem Datenbus übertragen wird, beispielsweise die Nachricht gemäß Fig. 2A In diesem Falle ist es einfacher und vor allem schneller, wenn auf dem Datenbus befindliche dominante Bits d mit in die Erzeugung des Startblockes SOF des Nachrichtenblockes mit der höheren Priorität einbezogen werden. Dazu werden in dem Beispiel gemäß Fig. 2 die ersten beiden dominanten Bits des zweiten Datenblockes der Nachricht gemäß Fig. 2A in die Erzeugung des Startblockes mit einbezogen. In Fig. 2C ist dargestellt, daß das sendende Gerät, das den Nachrichtenblock mit der höheren Priorität auf dem Datenbus übertragen will, selbst nur einen verkürzten Startblock SOFᵥ erzeugt, welcher von sich aus nur drei dominante Bits d enthält.

Diese Anzahl ist deshalb so gewählt worden, weil zum Zeitpunkt t₁, als der Wunsch der Übertragung der Nachricht mit der höheren Priorität entstand, bereits zwei dominante Datenbits in dem zweiten Datenblock der Nachricht gemäß Fig. 2A auf dem Bus waren. Es ist deshalb ab dem Zeitpunkt t₁ nur noch erforderlich, daß der Sender des Nachrichtenblockes mit der höheren Priorität drei weitere Datenbits d auf dem Bus erzeugt.

Nachdem auf diese Weise ein neuer Startblock erzeugt worden ist, können nachfolgend die Datenblöcke DB der Nachricht mit der höheren Priorität auf dem Datenbus übertragen werden, wie dies gemäß Fig. 2C angedeutet ist.

In Fig. 2F ist das Ergebnis der Unterbrechung des Nachrichtenblockes gemäß Fig. 2A durch den Nachrichtenblock höherer Priorität gemäß Fig. 2C dargestellt. Fig. 2F zeigt hierzu zunächst den Startblock SOF der Nachricht mit der geringeren Priorität und nachfolgend einen Datenblock DB des Nachrichtenblockes mit der geringeren Priorität gemäß Fig. 2A Die nachfolgend ursprünglich in der Nachricht gemäß Fig. 2A übertragenen beiden dominanten Bits d sind bereits mit genutzt für den Startblock SOF der nachfolgend übertragenen Nachricht höherer Priorität. In diesem Startblock SOF sind die beiden Bits des zweiten Nachrichtenblockes DB der Nachricht gemäß Fig. 2A und die drei Bits, die der Sender tatsächlich gemäß Fig. 2C übertragen hat, zusammengefaßt zu einem neuen Startblock SOF, der fünf dominante Bits d enthält, denen ein rezessives Bit r folgt. Nachfolgend erscheinen gemäß Fig. 2F auf dem Datenbus die Datenblöcke DB der Nachricht höherer Priorität gemäß Fig. 2C.

Es ist somit gelungen, die Nachricht höherer Priorität gemäß Fig. 2C wirklich sofort zu starten. Es ist sogar gelungen, bereits vor dem gewünschten Startzeitpunkt t₁ übertragene dominante Bits d der Nachricht gemäß Fig. 2A für den Startblock des Nachrichtenblockes höherer Priorität mit zu nutzen.

Eine wesentliche Voraussetzung für das Gelingen dieser schnellen Übertragung des Nachrichtenblockes höherer Priorität gemäß Fig. 2C ist, daß der Sender des Nachrichtenblockes niedrigerer Priorität gemäß Fig. 2A die Übertragung dieses Nachrichtenblockes sofort abbricht, wenn die dringendere Nachricht gemäß Fig. 2C gesendet werden soll.

Es können hierzu verschiedene Vereinbarungen getroffen werden. Die Sendung kann dann unterbrochen werden, wenn ein Startblock eines anderen Gerätes auf dem Bus auftaucht. Die Sendung kann aber auch bereits dann unterbrochen werden, wenn ein Bit, das als rezessives Bit r gesendet wurde, auf dem Datenbus tatsächlich als dominantes Bit auftaucht. Dieser Fall wurde für die Darstellung gemäß Fig. 2 gewählt. In Fig. 2D ist angedeutet, daß zum Zeitpunkt t₂ der Sender der Nachricht gemäß Fig. 2A erkennt, daß das unmittelbar vor dem Zeitpunkt t₂ gesendete rezessive Bit r des zweiten Datenblockes des Nachrichtenblockes auf dem Datenbus tatsächlich, wie die Darstellung gemäß Fig. 2F zeigt, als dominantes Bit auftaucht. Dies ist deshalb der Fall, weil der Sender der Nachricht mit der höheren Priorität gemäß Fig. 2C den verkürzten Startblock mit drei dominanten Bits erzeugt hat und somit das letzte Bit vor dem Zeitpunkt t₂ auf dem Datenbus als dominantes Bit auftaucht.

Da der Sender der Nachricht gemäß Fig. 2A laufend die Bits auf dem Datenbus überprüft, erkennt er zum Zeitpunkt t₂, daß das letzte von ihm als rezessives Bit übertragene Bit auf dem Datenbus tatsächlich als dominantes Bit auftaucht. Er unterbricht daher die Sendung seiner Nachricht, wie dies in Fig. 2E dargestellt ist. Das letzte von ihm als rezessives Bit übertragene Bit, das auf dem Datenbus tatsächlich als dominantes Bit auftaucht, ist das letzte übertragene Bit, da dies zum Zeitpunkt t₂ erkannt wurde und die Sendung der Nachricht entsprechend der Darstellung gemäß Fig. 2E abgebrochen wurde. Der letzte übertragene Datenblock ist ein verkürzter Datenblock DBᵥ, der im nachfolgenden nicht mehr weiter übertragen wird.

Es gelingt somit auf dem erfindungsgemaßen Datenbus, eine Nachricht niedrigerer Priorität jederzeit durch eine Nachricht höherer Priorität zu unterbrechen, ohne daß hierfür zusätzliche Übertragungskapazität erforderlich ist und ohne daß eine Verzögerung der Unterbrechung durch ein Abstimmungsverfahren auftritt.

## Patentansprüche

1. Datenbus für eine serielle Datenübertragung zwischen Geräten, welche Daten über den Datenbus senden und/oder empfangen können, wobei auf dem Datenbus rezessive und dominante Zustände vorgesehen sind, denen jeweils ein Bitwert zugeordnet ist,
dadurch gekennzeichnet,
daß Nachrichten in Nachrichtenblöcken übertragen werden, wobei jeder Nachrichtenblock zu Beginn einen Startblock mit (n+k) dominanten und j nachfolgenden rezessiven Bits und nachfolgende Datenblöcke mit n Datenbits und m nachfolgenden rezessiven Bits aufweist,
daß ein laufend übertragener Nachrichtenblock niedriger Priorität durch ein anderes Gerät zur Übertragung eines Nachrichtenblockes mit hoher Priorität unterbrochen werden kann, indem dieses einen neuen Startblock auf dem Datenbus erzeugt und nachfolgend die zugehörigen Datenblöcke sendet,
und daß ein einen Nachrichtenblock auf dem Datenbus sendendes Gerät laufend überprüft, ob auf dem Datenbus ein Startblock auftaucht und gegebenenfalls die Sendung seines Nachrichtenblockes abbricht.

2. Datenbus nach Anspruch 1, dadurch gekennzeichnet, daß nur ein festgelegtes Gerät befugt ist, andere Nachrichtenblöcke zu unterbrechen.

3. Datenbus nach Anspruch 1, dadurch gekennzeichnet, daß vorgegeben ist, mit welcher Art Nachricht ein Gerät andere Nachrichtenblöcke unterbrechen darf.

4. Datenbus nach Anspruch 1, dadurch gekennzeichnet, daß ein sendendes Gerät die Sendung eines Nachrichtenblocks abbricht, wenn das (n+1)te Bit eines Datenblockes auf dem Datenbus nicht rezessiv ist.

5. Datenbus nach Anspruch 1, dadurch gekennzeichnet, daß ein sendendes Gerät die Sendung eines Nachrichtenblocks abbricht, wenn eine vorgegebene Anzahl von Bits von dem (n+1)ten bis einschließlich zum (n+k)ten Bit eines Datenblockes auf dem Datenbus nicht rezessiv ist/sind.

6. Datenbus nach Anspruch 1, dadurch gekennzeichnet, daß ein sendendes Gerät einen eigenen Nachrichtenblock auf dem Bus während des Sendens bitweise überprüft und dann abbricht, wenn auf dem Datenbus ein als rezessives Bit gesendetes Bit tatsächlich als dominantes Bit auftaucht.

7. Datenbus nach Anspruch 1, dadurch gekennzeichnet, daß ein Gerät beim Erzeugen eines Startblocks eines einen anderen Nachrichtenblock unterbrechenden Nachrichtenblocks gegebenenfalls auf dem Datenbus vorhandenen dominante Bits in den zu erzeugenden Starblock einbezieht.

8. Datenbus nach Anspruch 1, dadurch gekennzeichnet, daß ein Empfänger ständig überprüft, ob während eines übertragenen ersten Nachrichtenblockes ein neuer Startblock eines neuen zweiten Nachrichtenblockes auftaucht, und daß der Empfänger gegebenenfalls den Empfang des übertragenen ersten Nachrichtenblockes abbricht und mit dem Empfang des zweiten, neuen Nachrichtenblockes beginnt.

9. Datenbus nach Anspruch 1, dadurch gekennzeichnet, daß n=4, m=1, k=1 und j=1 betragen.

10. Datenbus nach Anspruch 1, dadurch gekennzeichnet, daß zwei Prioritätsstufen für Nachrichtenblöcke vorgesehen sind.

11. Datenbus nach Anspruch 1, dadurch gekennzeichnet, daß ein Datenfehler erkannt wird, wenn nach n Datenbits kein rezessives Bit auf dem Datenbus auftritt und kein Startblock identifiziert wird.

12. Datenbus nach Anspruch 1, dadurch gekennzeichnet, daß nach einem Startblock abhängig von der Priorität des zu sendenden Nachrichtenblockes ein Senden einer vorgegebenen Anzahl von rezessiven bzw. dominanten Bits erfolgt.

13. Verwendung des Datenbusses für Fahrzeuge zum Austausch von Nachrichten zwischen Steuergeräten, insbesondere zum sofortigen und andere Nachrichtenblöcke unterbrechenden Senden eines Nachrichtenblockes, der eine Auslösung eines Airbags des Fahrzeugs auslöst.
